# EUROPEAN PATENT APPLICATION

(11) **EP 4 725 373 A1**
(43) Date of publication of application: **15.04.2026**
(21) Application number: 24205310.6
(22) Date of filing: 08.10.2024
(51) Int. Cl.: A47J 36/32, A47J 43/07

(54) **OPERATING SUPPORT FOR A KITCHEN APPLIANCE**

(71) Applicant: BSH Hausgeräte GmbH, 81739 München (DE)
(72) Inventor: Amon, Matej, 3332 Recica ob Savinji (SI); Orbanic, Henri, 1000 Ljubljana (SI); Brglez, Dejan, 1290 Grosuplje (SI); Kulkarni, Mohit, 414001 Ahmednagar (IN); Ooi, Ching Sheng, 573943 Singapore (SG); Ngo, Chi Trung, 573943 Singapore (SG); Tanyildiz, Baris, 573943 Singapore (SG); Cheong, Yi Heng, 440031 Singapore (SG); Ye, Lang, 573943 Singapore (SG); Conan, Mael, 573943 Singapore (SG)

(57) **Abstract**

A kitchen appliance for processing an ingredient, wherein the appliance comprises a receptacle (120) for the ingredient; a driving unit (125) with a mechanical tool (130) for treating the ingredient; input means (115, 160) for determining a desired state of the ingredient; a camera (135) for taking a picture of a content of the receptacle (120); processing means (140) for determining a state of the ingredient on the basis of the picture; and output means (115, 160) for outputting an indication of the determined state of the ingredient.

## Description

The present invention concerns a kitchen appliance. More specifically, the present invention concerns the operation of said kitchen appliance while preparing a dish.

A kitchen appliance is adapted to support a user in preparing a dish. The appliance may for instance comprise a mixer of some sort and be adapted to stir, mix or knead the contents of a receptacle. The user may place an ingredient for said dish in the receptacle and process it by means of the kitchen appliance. Depending on a desired outcome or purpose of the ingredient in the dish, processing may be required to be done differently. Moreover, the ingredient may vary in quality, freshness or temperature so that adapted processing may be required.

Although proposals have been made for supporting a user while preparing a predetermined dish, there remains a lack of advanced solutions that permit a dynamic or individual support for operating a kitchen appliance. An object of the present invention is therefore to provide a way for better control of a kitchen appliance, which is operable by a user to process an ingredient for a dish.

The invention solves the above-mentioned object with the subject matter of the independent claims. Dependent claims describe preferred embodiments.

According to a first aspect of the present invention, a kitchen appliance for processing an ingredient is proposed. The appliance comprises a receptacle for the ingredient; a driving unit with a mechanical tool for treating the ingredient; input means for determining a desired state of the ingredient; a camera for taking a picture of a content of the receptacle; processing means for determining a state of the ingredient on the basis of the picture; and output means for outputting an indication of the determined state of the ingredient. The state can especially be a treatment state, a processing state, a state of treatment or a state of processing. If not explicitly stated otherwise, all these types of states may be understood as equivalents.

The appliance may comprise a food processor or mixer or a similar appliance. By using computer vision, the outcome of a mechanically processed ingredient can be recognised and the processing can be controlled more accurately. The state of processing may for instance be given on a predetermined scale. An example scale may reach from "unprocessed" to "overdone" and a desired state of processing may match any point on that scale.

It was realized that mechanical processing of an ingredient may have a significant influence on the actual processing result. Traditional parameters like a speed setting and a time target for processing may not reliably produce desired results as the ingredient may be of unknown quality and circumstances not accounted for may affect the outcome.

The invention may help processing an ingredient more precisely and more reliably to reach a desired outcome. The ingredient may be frequently or continuously optically evaluated to achieve best results. The kitchen appliance may thus mimic a quality-ensuring process of a chef. Determination of the processing status may be done independently from a time over which processing was done before. In case of an interruption of a processing, state detection may recommence without problems.

By using the invention, even delicate processes like blending mayonnaise may be carried out without risk of failure. Over-processing the ingredient may be prevented. A warning may be emitted should the ingredient fail to get processed up to the desired state. The desired state of processing may be picked from a wide range, thus allowing precise definition of how the result should be. In some embodiments, the desired state of processing may have more than one parameter. For instance, blending a milkshake may be done until added fruit is completely mashed and the shake has reached a predetermined viscosity.

An ingredient within the meaning of this text may also comprise an intermediate product during the preparation of said dish. For example, the dish may comprise a dessert and the ingredient may comprise cream, yoghurt or fruit. Processing the one or more ingredients may result in the dish. In another example, dough for a cake may be processed in the kitchen appliance. After processing, the dough must be baked to turn it into a cake, therefore the kitchen appliance may be used for producing an intermediate product of the dish.

The indication may comprise a notification that the ingredient has reached the desired state of treatment. In response to the notification, a user may turn off processing, change a processing setting or add another ingredient for processing. The notification may especially comprise an audible, optical or haptic output to the user.

In some embodiments, the indication may be used to control the appliance. More specifically, the processing means may be adapted to control the driving unit such that the ingredient is processed until it reaches the desired (treating) state. It is furthermore preferred that the driving unit is controlled such that the ingredient reaches the desired (processing) state. This may imply changing a setting like a processing speed, a direction of movement or the kind of movement conveyed to the mechanical tool. A sequence of changes to a setting may be effected, for example stirring the ingredient sharply first, then slowly for some time, and powerfully later on. In some embodiments, more than one setting may be changed to control the processing of the ingredient. For example, the tool may comprise a turnable dough hook and the appliance may be adapted to turn the receptacle independently from the hook.

The desired state of processing may be determined on the basis of a recipe for preparing a predetermined dish on the basis of the ingredient. Thus, an indication of a desired state of processing may be interpreted in the light of an intended greater goal. This may help to define the desired state. The state that the ingredient is processed into may better fit with what is desired in context of the dish to be prepared. For example, processing an ingredient so that it is mashed may be different when the dish to be prepared comprises mashed potatoes than when it comprises a smoothie.

The kitchen appliance may further comprise another sensor for sensing the content of the receptacle; wherein the processing means may be adapted to determine the state of processing on the additional basis of the sensed quantity. The sensor may be adapted to determine a weight, a temperature, a humidity, a texture or a smell of the contents of the receptacle. It is especially preferred that several sensors are employed to sense various aspects of the ingredient while it is being processed. Determination of the state of processing may thus take into account more than one sensor reading. The state of processing may be determined more precisely, faster or more reliably.

The processing means may be adapted to carry out a machine learning technique for determining the state of treatment. The machine learning technique may especially comprise an approach that is known as artificial intelligence (AI). The technique may involve an artificial neural network (ANN) with several layers and training may be done as deep learning. Preferably, the ANN is trained by presenting known combinations of sensory inputs and associated states of processing. A combination may also comprise an indication of the ingredient being processed. More related information may concern circumstances under which the data was collected, for instance when, in what kind of kitchen appliance and/or under which settings of the appliance the data was collected.

The machine learning technique is preferred to operate on pre-processed data. The picture taken from the contents of the receptacle may for instance be undistorted, noise may be removed, the lighting conditions may be compensated for, or a region of interest (ROI) may be determined. The technique may be adapted to predict how sensory data should be, once the ingredient reaches the desired processing state. It can then compare actual sensor readings with predicted sensor readings and determine how far the ingredients are from reaching the desired processing state.

The processing means may be adapted to train an ANN using the technique based on data observed from the ingredient during processing. Training the ANN using the machine learning technique may be done by the processing means, i.e. on board the kitchen appliance. In some embodiments, training may be done on a different machine, especially outside the kitchen appliance. Training may be based on large or numerous data sets and training may involve computationally expensive operations. A machine for training said technique may thus be equipped with a large data storage and/or a powerful processing unit.

The kitchen appliance may be adapted to collect observation data during processing the ingredient. In one example, cream may be whipped. By keeping on whipping, the cream may transit through different stages or processing states and the transit may be observed with the camera and possibly an additional sensor. A first state may relate to liquid cream with foam, a second state to very soft peak, a third state to soft peak, a fourth state to stiff peak, a fifth state to over-whipped cream (which is largely unusable for food preparation) and a sixth state to butter. By processing some quantity of liquid cream to, e.g., the fourth state, its transit through the states one through four can be observed. Observed data may be used to further train the ANN using the machine learning technique. A user may express how satisfied he is with an achieved state of processing and this expression may be used to label the data for training.

The kitchen appliance may further comprise communication means, especially for exchanging data with a remote computing backend. The remote computing backend may be adapted to provide a machine learning model that is trained to perform the above-indicated determination of the state of processing of an ingredient. The kitchen appliance may be adapted to provide observed data to the remote backend and the backend may use the data for training the model.

According to a further aspect of the present invention, a system is provided. The system comprises a kitchen appliance described herein and a computing backend running a foundation model for food processing. The computing backend is adapted to receive, from the kitchen appliance, at least one quantity that was sensed from the content of the receptacle, an indication of a process to be carried out on the ingredient, and an indication of a user operating the household appliance. The backend is furthermore adapted to provide, by means of the foundation model, a parameter for the kitchen appliance for carrying out the processing.

In contrast to known support models, a parameter or setting for the kitchen appliance may be determined taking the user into account. Cooking is a complex undertaking and a dish (i.e. the cooking result) may be perceived differently by different users. By considering a user who is operating the kitchen appliance, processing may be controlled such that the specific user will be satisfied with the processing result.

The user may have an associated food preparation preference and the parameter may be determined on the basis of the preference. The preference may include a taste, a food texture, a crunch, a cooking style or a food characteristic obtained through processing. In some embodiments, the user may describe his or her preferences, for instance in the shape of user settings. In some further embodiments, the preference may be determined by observing the user. User preferences may include for instance a selection of recipes for preparing dishes or other personal information like ethnicity, a preferred diet or ingredients to avoid.

Other information that is available about the user may also be considered. Such information may be used to relate one user to a group of users, which are similar in some aspects. A collective preference of the group may then be extended to the user. Should an alleged preference turn out to be incorrect, it may be reverted. The user may be disassociated from the group of people and possibly associated to a different group.

The user may have an associated observed food preparation behaviour and the parameter may be determined on the basis of the behaviour. Behavioural data may comprise a variation, which the user introduces to a recipe or a cooking habit. Such a habit may comprise to what degree the user cooks dishes or what food combinations are recurring.

It is preferred that the parameter is determined on the basis of a dish to be prepared. In this context, the ingredient that is processed in the kitchen appliance forms a part of the dish. A change in processing the ingredient may therefore affect the characteristics of the resulting dish.

Non-restricting embodiments of the invention will now be discussed in more detail with reference to the enclosed drawings in which:
- Figure 1: shows a system; and
- Figure 2: shows an exemplary flow chart 200 for controlling a kitchen appliance 105.

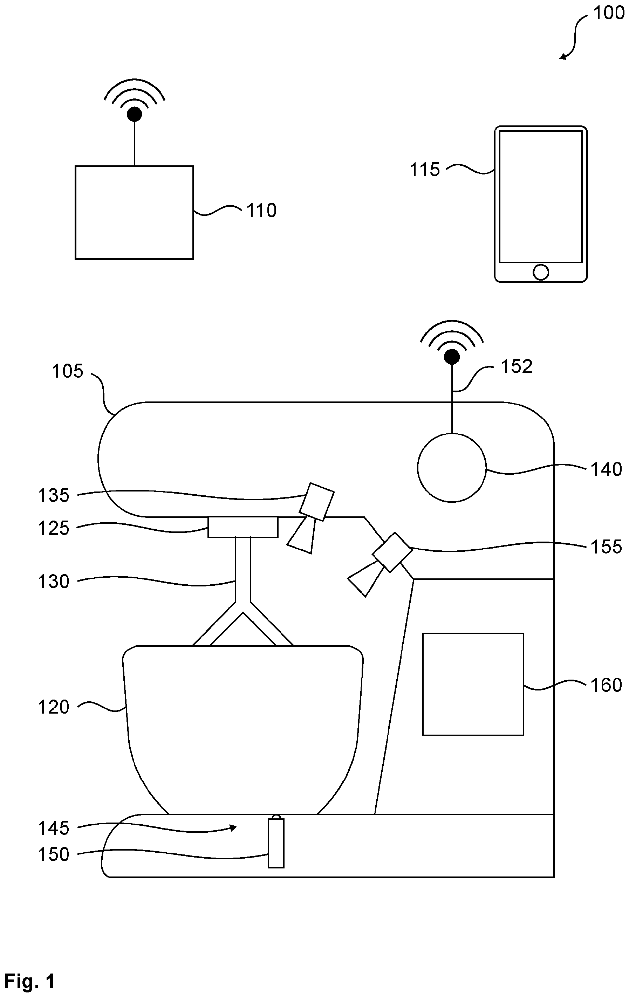

Figure 1 shows a schematic representation of an exemplary system 100, comprising a kitchen appliance 105, a computing backend 110 and an optional mobile device 115. The shown kitchen appliance 105 is a food processor, but a different kind of appliance 105 is also possible.

The appliance 105 comprises a receptacle 120 for an ingredient of a dish, a driving unit 125 with a mechanical tool 130 for treating the contents of the receptacle, a camera 135 and processing means 140. Optionally, one or more other sensors like a weight sensor 145, a temperature sensor 150 or a VOC (volatile organic compound) sensor 155 may be provided. The processing means 140 may be connected to a communication unit 152. A user interface 160 may be adapted to be operated by a user. Optionally, the mobile device 115 may be used as a user interface.

The receptacle 120 usually comprises a bowl, which may be made out of plastic, metal or glass. An ingredient may be placed into the receptacle 120 and the ingredient may be processed by means of the mechanical tool 130. The tool 130 may for instance comprise a dough hook, a rotating knife or a ball-shaped whipping net. The driving unit 125 usually comprises an electric motor and possibly a fixed or controllable reduction gear. The kitchen appliance 105 may support a range of different tools 130, which may be attached or removed from the driving unit 125 by the user. The driving unit 125 and/or a tool 130 may be configured for a task, for instance by selecting an appropriate speed reduction or by assembling several tools 130 together.

The camera 135 is preferred to be situated above the receptacle 120, especially if the receptacle is intended to remain uncovered during processing or a lid for the receptacle 120 is transparent or has an opening for the camera 135 to look through. The camera 135 may also be mounted laterally to the receptacle 120 if the receptacle 120 is made out of a transparent material.

The camera 135 is preferred to be adapted to take a colour picture of the contents of the receptacle 120. It is especially preferred that a picture can be taken during processing, so that no interruption of processing is required for taking a picture. The camera 135 may operate in a visible colour range. Optionally, illumination means may be integrated so that a picture taken from the contents of the receptacle is based on known, influenceable or controllable light conditions.

The weight sensor 145 is adapted to determine a weight of the receptacle 120 and its contents. By observing a change of weight, it can be determined what quantity of an ingredient is added or removed from the receptacle 120. The temperature sensor 150 may be adapted to determine a temperature of the receptacle. In some embodiments, several temperature sensors 150 are disposed in different locations of the receptacle 120, for instance near the bottom and on the side.

The VOC 155 sensor is adapted to detect volatile organic compounds, which are generally associated to smells. Different kinds of smell may be detectable, emanating from the ingredients inside the receptacle.

There may be more or other sensors, which are not depicted in Figure 1. In some embodiments, a humidity sensor for determining how wet the ingredient is may be present. There may also be a current sensor for determining an electric current, which flows through the driving unit 125.

The kitchen appliance 105 may be controllable through the user interface 160, which may be adapted to collect an input from a user and/or provide an output to the user. Input may be done for instance in haptic or acoustic form. Output may comprise audio, visual or haptic information. Corresponding user interface capabilities may be supported by the mobile device 115, which may be communicatively connected to the kitchen appliance 105. The connection is preferred to be wireless. It may use e.g. Bluetooth or Wi-Fi.

The user interface 160 may also be used for providing user feedback to the kitchen appliance 105, for instance how happy the user was with the result of some processing that was carried out. The user may furthermore use the interface 160 for selecting or reading a cooking recipe. A selected cooking recipe may comprise information on processing an ingredient and the user may execute said processing through the kitchen appliance 105.

In some embodiments, the processing means 140 are adapted to implement or execute an AI model for determining a processing status of an ingredient inside the receptacle 120 on the basis of readings from the camera 135 and optionally one or more other sensors 145 to 155. During processing, an indication of a current processing state may be output to the user.

Through the user interface 160, a desired processing state for the ingredient may be provided by the user. The processing means 140 may give an indication of how far the current processing state is from the desired state. This may include an estimated remaining processing time. The processing means 140 may also be adapted to control the household appliance 105, especially the driving unit 125, such that an ingredient inside the receptacle 120 is processed to a desired state. When the ingredient reaches said state, processing may be stopped or maintained on a low level.

The computing backend 110 may be adapted to train an AI model for determination of a processing state of some ingredient on the basis of a camera picture and possibly more sensory data. The trained model may be downloaded to the kitchen appliance 105 and used or implemented by the processing means 140.

According to a further aspect of the present invention, the processing means 140 and/or the computing backend 110 may provide a control parameter for controlling the kitchen appliance 105 in order to process a predetermined ingredient. The parameter may be determined in accordance with an indication of a process to be carried out on the ingredient and an indication of a user operating the household appliance 105. An indication of a desired outcome of the processing may also be considered. The household appliance 105 may then be controlled on the basis of said parameter.

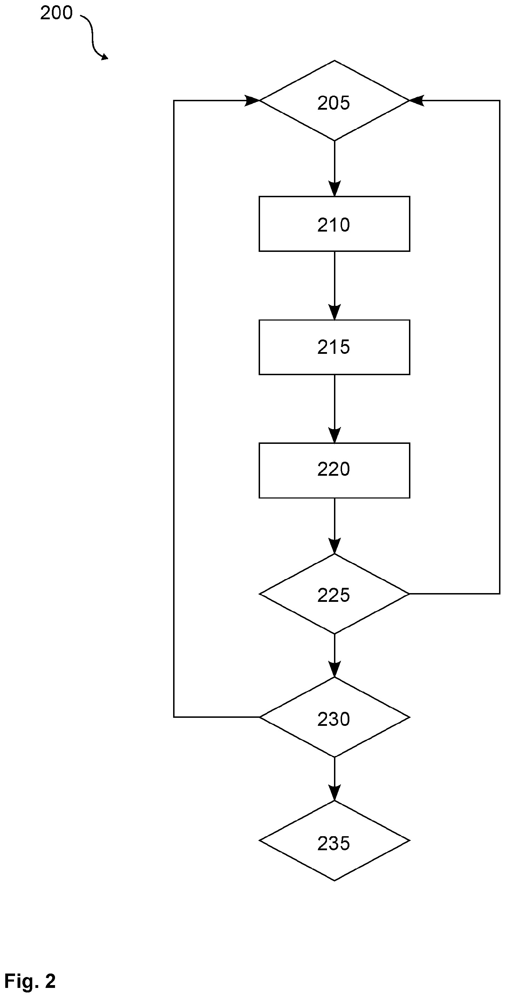

Figure 2 shows an exemplary flow chart 200 for controlling a kitchen appliance 105. The chart assumes the usage of a kitchen appliance 105 as discussed above making reference to Figure 1. Software runs on the kitchen appliance 105 that uses known data processing techniques for processing sensor data. Such software may comprise e.g.:
- Real time computer vision, image processing, and/or machine learning library toolbox programming functions in various integrated development environments for interoperability (e.g. Python and/or C).
- Computer vision: OpenCV.
- Image processing: keras, tensorflow, pytorch, numpy, image labeller and object detection feature generator.
- Inference architecture: Artificial Neural Network (ANN) model.
- Statistical methods: time series regression and discrete classification (MobileNet, Tensorflow Lite).

In a step 205, data collection through sensors is triggered. An image may be captured by means of an RGB imaging sensor in the camera 135 when a triggering event is detected. Possible triggering events may comprise:
- machine power supply on button activation,
- gripping tool positioning detection,
- weight measurement via scale sensor and/or
- GUI/mobile application virtual start button.

The up-to-date image signal may be labelled in an ascending order or with a timestamp.

In a step 210, data may be acquired from a sensor. The following activities may e.g. be carried out.
- Image transmission from slave (sensor equipment) to host (microprocessor) via a wired connection (ethernet RJ45, I2C, SPI) or wireless transfer (Wi-Fi and/or secured shell [ssh] connection).
- Perform image read, write and display using AL library toolbox: opencv function (imread, imwrite, imshow).
- Run sensor and temperature calibration if necessary with software scaling factor or adjustment.
- Speed up data processing time by using parallel computing toolbox to utilise multicore processors simultaneously.
- Position sensor to assist image capture without obstruction: delay image capture after position sensing activation.
- LED lighting emission to improve image brightness in the event of low light condition.
- RGB with no infrared filtering may be applied to reduce reflection effect from the receptacle 120, gripping tool and ingredients.

In a step 215, statistical analysis may be carried out on the acquired data. Step 215 may comprise e.g. the following:
- The image may be subjected to pre-processing techniques for denoising purposes: blurring, slide windowing, brightness adjustment, segmentation etc.
- Time series input may be subjected to statistical pre-processing techniques for denoising and feature extraction purposes: averaging, kurtosis, skewness, slide window domain transform (e.g. wavelet and Fourier series).

In a step 220, an AI model may be trained for food preparation inferencing.
- Food preparation from the start until the end may be conducted for dataset collection.
- The dataset collected including image and time series signals (scale, current, temperature) may be supplied as model training.
- Feature extraction and selection may be performed to select the most probable input combination and prevent model overfitting issues.
- The prediction model may generate predicted output in the form of a region of interest (ROI) and/or a classification name (either class number or synthetic name label).
- The prediction model accuracy may be tested against a new trial run of the food preparation.
- Example: An image dataset of whipped cream for a coffee topping is collected for model training. The cream is processed from a liquid form, via soft peaks, stiff peaks, under-whipped to over-whipped and finally becomes butter. Each and every stage will generate unique features in shapes, surface texture, and/or waveform for pattern recognition. The AI model may be trained to identify a transition period upon the receipt of a new image and/or a time series signal as an input combination.

In a step 225, output may be provided.
- The user interface 160 may allow food preparation monitoring over time.
- In case of improvisation, pause and continue functions may be enabled. The food preparation progress may be recalculated after resume operation. The user interface 160 may then display predicted time remaining to complete an intended food preparation process.

In a step 230, processing parameters may be controlled.
- The driving unit 125 may be controlled to start processing of the ingredient by the kitchen appliance 105.
- When the determined processing state matches the desired processing state, the driving unit 125 may be controlled to stop processing.
- The kitchen machine gripping tool may return to its initial state and the food preparation and the progress bar may return to stage 0 after reset.

In a step 235, user feedback may be collected.
- The user interface 160 may allow the user to rate the processing success, the safety features, and/or the quality of outcome from lowest to highest (e.g. 0 stars to 5 stars).
- The image, the time series signals data, and/or the prediction outcome may be labelled corresponding to feedback ratings for continuous learning.

The system 100 may operate on multiple layers, starting with an input layer comprised of sensors 135-155 capturing multimodal data and user feedback. These sensors 135-155 gather information such as scale measurements, current readings, temperature fluctuations, visual observations, olfactory cues, and humidity levels, providing a comprehensive understanding of the cooking environment. User inputs, including cooking preferences, ingredient choices, and desired outcomes further enhance the data collection process. User inputs may be collected from the user interface 160 and/or the mobile device 115.

A second layer comprises the processing means 140, which allow the kitchen appliance 105 to operate as an edge computing device. This processing means 140 act as the hub for edge automation, making real-time decisions on when to initiate or halt various kitchen processes, including food preprocessing and cooking steps. The edge device, preferably equipped with multimodal inferencing algorithms and edge reinforcement learning, may handle personalized recipe recommendations and on-edge recipe personalization. These algorithms can be updated with firmware updates for better outcomes. Leveraging techniques such as reinforcement learning (RL) and embeddings, the edge device may autonomously manage various cooking tasks, including food preprocessing, ingredient mixing, and cooking temperature control. RL algorithms may optimize the appliance's actions based on feedback from the environment, ensuring that cooking outcomes align with user preferences at every step.

Simultaneously, data from the sensors and user inputs may be transmitted to the computing backend 110, which may be realized as a server or as a service, possibly in a computer cloud. After filtering out personally identifiable information (PII), provided data is aggregated to create a unified model enriched with common knowledge and a comprehensive database. Thus, a multi-modal inferencing model may be trained online. The inference model may be capable of observing real-time multi-modal data input from targeted appliances 105 and output personalised food grading/indexing. The model may then update the mobile device 115 and communicate with the kitchen appliance 105 for real-time actuator adjustments based on model output during food processing application. Techniques such as reinforcement learning (RL), embeddings, knowledge graphs (KG), large language models (LLM), and large vision models (LVM) may be employed to train this model, allowing it to continuously refine itself based on new information. Each of these techniques can be employed to train the unified model enriched with common knowledge and a comprehensive database.

Reinforcement Learning (RL): RL can be utilized to optimize the decision-making process of the smart kitchen system. By employing RL algorithms, the system can learn from interactions with the environment (i.e., the cooking process) and adjust its actions to maximize long-term rewards. For example, RL can help the system determine the optimal cooking parameters (such as temperature and cooking duration) based on user preferences and ingredient characteristics.

Embeddings: Embeddings are dense vector representations of words or entities that capture semantic relationships between them. In the context of the smart kitchen system, embeddings can be used to represent ingredients, cooking techniques, and user preferences in a continuous vector space. This allows the system to better understand the similarities and relationships between different culinary elements, facilitating more accurate recommendation and personalization.

Foundational Model: Foundational models refer to the fundamental models that capture essential knowledge about cooking principles, ingredient interactions, and flavour profiles. Such a model serves as the backbone of the unified model proposed herein, providing a comprehensive understanding of culinary science facilitating informed decision-making and optimize cooking processes.

Knowledge Graphs (KG): Knowledge graphs represent structured information about entities and their relationships in a graph format. In the smart kitchen system, KGs can capture domain-specific knowledge about ingredients, recipes, cooking techniques, and user preferences. By organizing this information into a graph structure, the system can efficiently query and retrieve relevant knowledge to enhance decision-making and personalization.

Large Language Models (LLM): LLMs, such as transformer-based models like BERT or GPT, excel at understanding natural language text and generating contextually relevant responses. In the context of the smart kitchen system, LLMs can be used to analyse textual inputs from users, such as recipe instructions, ingredient lists, and cooking preferences. These models can extract valuable insights from textual data, allowing the system to tailor its recommendations and actions accordingly.

Large Vision Models (LVM): LVMs are deep learning models designed to process and understand visual information. In the smart kitchen system, LVMs can analyse images and videos captured by cameras installed in the kitchen environment. These models can recognize ingredients, monitor the cooking progress, and detect anomalies or safety hazards. By incorporating LVMs, the system gains a visual understanding of the cooking process, enabling it to make more informed decisions and provide personalized assistance.

The integration of these techniques into the training pipeline of the unified model enables the smart kitchen system 100 to learn from diverse data sources, encompassing text, images, and structured knowledge. Through continuous refinement and adaptation, the system acquires a comprehensive understanding of cooking principles and user preferences, enabling an optimization of the cooking processes leading to personalized culinary experiences tailored to each user's taste preferences and cooking style.

Furthermore, this common knowledge base may extend beyond the confines of a single appliance. The insights gained from the unified model can be transferred to other kitchen appliances, such as microwaves and ovens, enabling them to benefit from the same level of personalization and intelligence. Federated learning techniques facilitate the seamless transfer of knowledge across devices, allowing each appliance to continually improve and evolve based on collective insights and experiences.

### Reference list (as part of the description)

- 100: system
- 105: kitchen appliance
- 110: computing backend
- 115: mobile device

- 120: receptacle
- 125: driving unit
- 130: tool
- 135: camera
- 140: processing means
- 145: weight sensor
- 150: temperature sensor
- 152: communication unit
- 155: VOC sensor
- 160: user interface

- 200: flow chart
- 205: trigger data collection
- 210: acquire data
- 215: statistical analysis
- 220: AI model prediction
- 225: provide output
- 230: control processing parameters
- 235: collect user feedback

## Claims

1. Kitchen appliance (105) for processing an ingredient, the appliance comprising:
- a receptacle (120) for the ingredient;
- a driving unit (125) with a mechanical tool (130) for treating the ingredient;
- input means (115, 160) for determining a desired state of the ingredient;
- a camera (135) for taking a picture of a content of the receptacle (120);
- processing means (140) for determining a state of the ingredient on the basis of the picture; and
- output means (115, 160) for outputting an indication of the determined state of the ingredient.

2. Kitchen appliance (105) according to claim 1, wherein the indication comprises a notification that the ingredient has reached the desired state.

3. Kitchen appliance (105) according to claim 1 or 2, wherein the processing means (140) are adapted to control the driving unit (125) such that the ingredient is processed to reach the desired state.

4. Kitchen appliance (105) according to one of the above claims, wherein the desired state is determined on the basis of a recipe for preparing a predetermined dish on the basis of the ingredient.

5. Kitchen appliance (105) according to one of the above claims, further comprising another sensor for sensing the content of the receptacle (120); wherein the processing means (140) is adapted to determine the state on the additional basis of the sensed quantity.

6. Kitchen appliance (105) according to one of the above claims, wherein the processing means (140) are adapted to carry out a machine learning technique for determining the state of the ingredient.

7. Kitchen appliance (105) according to claim 6, wherein the processing means (140) are adapted to train an artificial neural network using the machine learning technique based on data observed from the ingredient during processing.

8. Kitchen appliance (105) according to one of the above claims, further comprising communication means (152) for exchanging data with a remote computing backend (110).

9. System (100), comprising a kitchen appliance (105) according to claim 8 and a computing backend (110) running a foundation model for food processing;
- wherein the computing backend (110) is adapted to receive, from the kitchen appliance (105),
- at least one quantity that was sensed from the content of the receptacle (120),
- an indication of a process to be carried out on the ingredient
- and an indication of a user operating the household appliance; and
- wherein the computing backend (110) is adapted to provide, by means of the foundation model, a parameter for the kitchen appliance (105) for carrying out the processing.

10. System (100) according to claim 9, wherein the user has an associated food preparation preference.

11. System (100) according to claim 9 or 10, wherein the user has an associated observed food preparation behaviour.

12. System (100) according to one of claims 9 through 11, wherein the parameter is determined on the basis of a dish to be prepared.

## Amended claims

### Amended claims in accordance with Rule 137(2) EPC.

1. Kitchen appliance (105) for processing an ingredient, the appliance comprising:
- a receptacle (120) for the ingredient;
- a driving unit (125) with a mechanical tool (130) for treating the ingredient;
- input means (115, 160) for determining a desired state of the ingredient;
- a camera (135) for taking a picture of a content of the receptacle (120);
- processing means (140) for determining a state of the ingredient on the basis of the picture; and
- output means (115, 160) for outputting an indication of the determined state of the ingredient;
**characterized in that** the kitchen appliance is adapted
- to collect observation data during processing the ingredient and
- to allow a user to express how satisfied he is with an achieved state of processing,
- wherein this expression is used to label the observation data for training an artificial neural network of the processing means (140) using a machine learning technique for determining the state of the ingredient.

2. Kitchen appliance (105) according to claim 1, wherein the indication comprises a notification that the ingredient has reached the desired state.

3. Kitchen appliance (105) according to claim 1 or 2, wherein the processing means (140) are adapted to control the driving unit (125) such that the ingredient is processed to reach the desired state.

4. Kitchen appliance (105) according to one of the above claims, wherein the desired state is determined on the basis of a recipe for preparing a predetermined dish on the basis of the ingredient.

5. Kitchen appliance (105) according to one of the above claims, further comprising another sensor for sensing the content of the receptacle (120); wherein the processing means (140) is adapted to determine the state on the additional basis of the sensed quantity.

6. Kitchen appliance (105) according to one of the above claims, further comprising communication means (152) for exchanging data with a remote computing backend (110).

7. System (100), comprising a kitchen appliance (105) according to claim 6 and a computing backend (110) running a foundation model for food processing;
- wherein the computing backend (110) is adapted to receive, from the kitchen appliance (105),
- at least one quantity that was sensed from the content of the receptacle (120),
- an indication of a process to be carried out on the ingredient
- and an indication of a user operating the household appliance; and
- wherein the computing backend (110) is adapted to provide, by means of the foundation model, a parameter for the kitchen appliance (105) for carrying out the processing.

8. System (100) according to claim 7, wherein the user has an associated food preparation preference.

9. System (100) according to claim 7 or 8, wherein the user has an associated observed food preparation behaviour.

10. System (100) according to one of claims 7 through 9, wherein the parameter is determined on the basis of a dish to be prepared.

11. System (100) according to one of claims 7 through 10, wherein the user is associated with a group of users, that has a collective preference, which is extended to the user.
